# EUROPEAN PATENT APPLICATION

(11) **EP 4 527 252 A1**
(43) Date of publication of application: **26.03.2025**
(21) Application number: 23209591.9
(22) Date of filing: 14.11.2023
(51) Int. Cl.: A47C 1/03, A47C 7/54, F16B 5/06

(54) **ADJUSTABLE ARM REST AND SOFA OR CHAIR WITH SUCH ARM REST**

(30) Priority: 25.09.2023 CN 202322598026 U
(71) Applicant: Zhejiang Botai Furniture Co., Ltd., Huzhou, Zhejiang (CN)
(72) Inventor: Zhou, Zeren, Huzhou (CN); He, Guangsheng, Huzhou (CN); Zhang, Keming, Huzhou (CN)
(74) Representative: Garavelli, Paolo

(57) **Abstract**

The present disclosure provides a foldable armrest, a sofa and a single chair. The foldable armrest includes an armrest body. The armrest body includes an outer side plate and an inner side plate which may draw close to each other in a width direction of the armrest body. A width adjusting mechanism is connected between the outer side plate and the inner side plate. The width adjusting mechanism includes locking kits and at least one adjusting rod. The locking kits are connected with the inner side plate, the adjusting rods are connected with the outer side plate, and the locking kits and the adjusting rods are interlocked in the width direction of the armrest body. When the outer side plate and the inner side plate move away from each other in the width direction of the armrest body, the width adjusting mechanism extends in the width direction of the armrest body, and when the outer side plate and the inner side plate move closer to each other in the width direction of the armrest body, the width adjusting mechanism retracts in the width direction of the armrest body. The present disclosure has the beneficial effects: a width of the armrest may be adjusted according to requirements, so as to save transportation space and costs and increase a container loading capacity; the width is adjusted according to actual requirements of users, such that the requirements of different users are met; and the whole structure is convenient to adjust.

## Description

### TECHNICAL FIELD

The present disclosure relates to the field of furniture, in particular to a foldable armrest, a sofa and a single chair.

### BACKGROUND ART

At present, the transportation costs surge, especially the ocean freight of export products stays at a high level, so how to increase the container loading capacity and reduce the ocean freight has become an urgent problem for the industry to solve. A sofa or single chair, as an article commonly used in people's work and life, belongs to oversized furniture. However, armrests of a sofa or single chair in the prior art are usually of an integrated fixed connection structure, and occupy too much space. Usually, it is of a fixed structure, which has a large packaging volume and small container loading capacity, such that a large quantity of human and material resources are necessary during transportation, and consumed time is long. Very large space is also necessary during storage, such that storage and transportation costs are increased. A width of each of the existing sofa armrests may not be adjusted, and is available in only one size, which may not meet the requirements of users.

In order to solve the above technical problem, CN202221714259.9 has disclosed a sofa armrest frame convenient to fold and a sofa. The sofa armrest frame includes two articulated top plates; a first side plate articulated to one side of one top plate; a second side plate articulated to one side of the other top plate; two sets of first limiting parts arranged on the first side plate and the second side plate respectively; and two supporting plates provided with second limiting parts mated with the first limiting parts on two sides of the two supporting plates. Armrests of the sofa may be folded during transportation, such that space is saved to a certain degree, and transportation costs are reduced. However, the above sofa only has a second state of folding and a first state of unfolding. Although the problem generated during transportation is solved, the traditional armrest may be limited to a fixed size (either large or small), but cannot be folded or unfolded, such that it cannot solve the problem that users may not adjust widths of the armrests of the sofa or single chair according to their own requirements in actual use. Moreover, an original structure is relatively large in packaging volume, not suitable for packaging over UPS and small in container loading capacity. The fixed design of furniture contributes to a significant homogeneous problem, which does not meet the requirements of some markets and personalized requirements of customers.

Thus, it is urgently necessary to develop attractive armrests that may achieve the objectives of saving transportation space and costs, increasing the container loading capacity and adjusting the width according to actual requirements of the users.

### SUMMARY

In view of the defects in the prior art, the present disclosure aims to provide foldable armrests, a sofa and a single chair, which are used for solving the problems that existing commercial transportation space is large, costs are high, a container loading capacity is small, and a width of each of armrests may not be adjusted according to actual requirements of users.

In order to achieve the above objectives and other relevant objectives, the present disclosure provides a foldable armrest, including armrest body. The foldable armrest is characterized in that the armrest body includes an outer side plate and an inner side plate which may be folded in a width direction of the armrest body; a width adjusting mechanism is connected between the outer side plate and the inner side plate; the width adjusting mechanism includes locking kits and at least one adjusting rod; the locking kits are connected with the inner side plate, the adjusting rods are connected with the outer side plate, and the locking kits and the adjusting rods are interlocked in the width direction of the armrest body; and when the outer side plate and the inner side plate move away from each other in the width direction of the armrest body, the width adjusting mechanism extends in the width direction of the armrest body, and when the outer side plate and the inner side plate move closer to each other in the width direction of the armrest body, the width adjusting mechanism retracts in the width direction of the armrest body.

Preferably, each of the locking kits includes a connecting part and a locking sleeve, the connecting part is connected to one side of the inner side plate facing the outer side plate, and the locking sleeve detachably penetrates into the connecting part.

Preferably, the connecting parts include a connecting plate, the connecting plate is installed on one side of the inner side plate facing the outer side plate, at least one insertion hole allowing the locking sleeve to be inserted therein is formed in the connecting plate, two ends of each of the insertion holes extend in a direction perpendicular to the connecting plate to form two sections of cylindrical walls enclosed outside the locking sleeve, and the cylindrical walls penetrate through the inner side plate.

Preferably, each of the locking sleeves includes a head part and a rod part extending in an axial direction of the head part, and a central through hole internally penetrates through the head part to the rod part in a central axis direction of the locking sleeve; and the rod part is detachably inserted into the cylindrical walls of the connecting plate and mated with the cylindrical walls in a clamped manner.

Preferably, elastic clamps capable of being sprung or pressed down are arranged on the rod parts, recesses mated with the elastic clamps are formed in the cylindrical walls, and when the rod parts are inserted into the cylindrical walls, the elastic clamps are clamped into the recesses of the cylindrical walls.

Preferably, each of the adjusting rods corresponds to one insertion hole, the adjusting rod is connected to one side of the outer side plate facing the inner side plate through a connecting sheet, and each of the adjusting rods is inserted into the central through hole of the locking sleeve in the width direction of the armrest body and mated with the locking sleeve in a clamped manner.

Preferably, each of the adjusting rods is provided with a plurality of annular recesses in a length direction of the adjusting rod at intervals, clamping protrusions capable of being clamped into the annular recesses of the adjusting rods are arranged on inner walls of the head parts, and when the adjusting rods are inserted into the rod parts, the clamping protrusions are alternatively clamped into the annular recesses of the adjusting rods.

Preferably, a plurality of supporting plates are detachably connected between the outer side plate and the inner side plate.

Preferably, each of the armrest bodies is detachably sleeved with an armrest cover.

More preferably, the armrest cover may be of a fully-detachable or a semi-detachable structure, and the supporting plates are convenient to detach and install since the armrest cover is of the detachable structure. The detached armrest cover may be washed and subjected to vacuum compression packaging, which is conducive to transportation.

Preferably, a plurality of grooves extending in a central axis direction of each rod part are formed in an outer wall of the rod part.

A sofa is characterized by including at least one foldable armrest.

A single chair is characterized by including at least one foldable armrest.

The armrest body of the present disclosure has a plurality of adjustable gears, each gear corresponds to an annular recess, with a minimum interval between the inner side plate and the outer side plate representing a first gear, which is increased by degrees. During transportation, the lowest gear may be selected, the supporting plates are detached after fully detaching or semi-detaching the corresponding armrest cover, and a width of the sofa or single chair is adjusted to the minimum, so as to increase the container loading capacity. When a user needs to adjust the width of the corresponding armrest body according to his/her own requirements, he/she pulls the outer side plate outwards in the width direction of the armrest body, the outer side plate drives the adjusting rods to move synchronously till the clamping protrusions of the locking sleeve are clamped into the annular recesses at a corresponding gear. As a result, the armrest is fixed in the width direction by the locking sleeve and the adjusting rods, and therefore the width of the sofa or single chair is adjusted.

Advantageously, the connecting parts and the adjusting rods are connected through the connecting plate and the connecting sheet respectively, distance matching is precise, and either smooth inserting or pulling-out by pressing latches may be achieved, thereby achieving convenient installation and detachment.

More advantageously, the plurality of supporting plates are detachably connected between the outer side plate and the inner side plate, the supporting plates may be connected with the outer side plate and the inner side plate in a mortise and tenon joint manner without being fixed by gun nails or screws, thereby achieving convenient installation and detachment. It is ensured that the outer side plate and the inner side plate are well supported, and meanwhile the armrest covers are tightened, such that the appearance is kept flat.

Each of the armrest covers of the present disclosure may be of the fully-detachable or the semi-detachable structure, and the supporting plates are convenient to detach and install since the armrest cover is of the detachable structure. The detached armrest cover may be washed and subjected to vacuum compression packaging, which is conducive to transportation. Due to the folding and unfolding structure of the armrests, the wide armrests may be compressed into a small-size package, in addition, soft packages, such as a seat cushion and a backrest cushion, may be detached and subjected to vacuum compression packaging, the volume is small, and the high container loading capacity is achieved. The width adjusting mechanism is of an extensible gear structure, such that different widths of the armrests may be achieved according to requirements. It is convenient for customers to assemble, they may read an instruction book or watch an assembly video, thereby ensuring that the customers may rapidly assemble the sofa or single chair.

The present disclosure has the beneficial effects that the widths of the armrests can be adjusted according to requirements, so as to save transportation space and costs and increase the container loading capacity; the widths can also be adjusted according to the actual requirements of the users, such that the requirements of different users are met; and the whole structure is convenient to adjust and attractive in appearance.

### BRIEF DESCRIPTION OF THE DRAWINGS

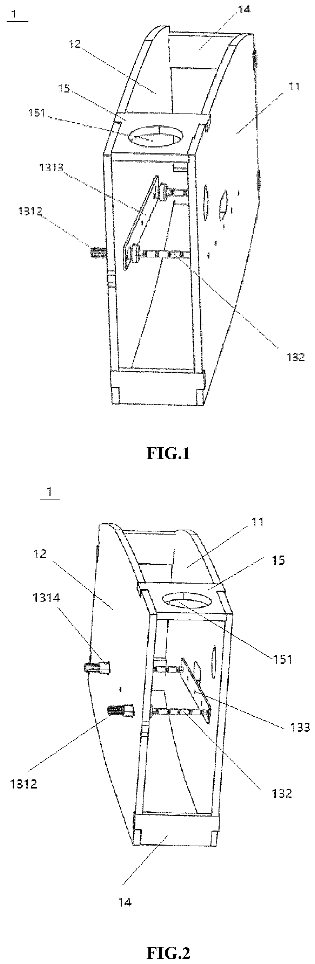

FIG. 1 is a first structural diagram of a foldable armrest according to the present disclosure (unfolded state).
FIG. 2 is a second structural diagram of a foldable armrest according to the present disclosure (unfolded state).

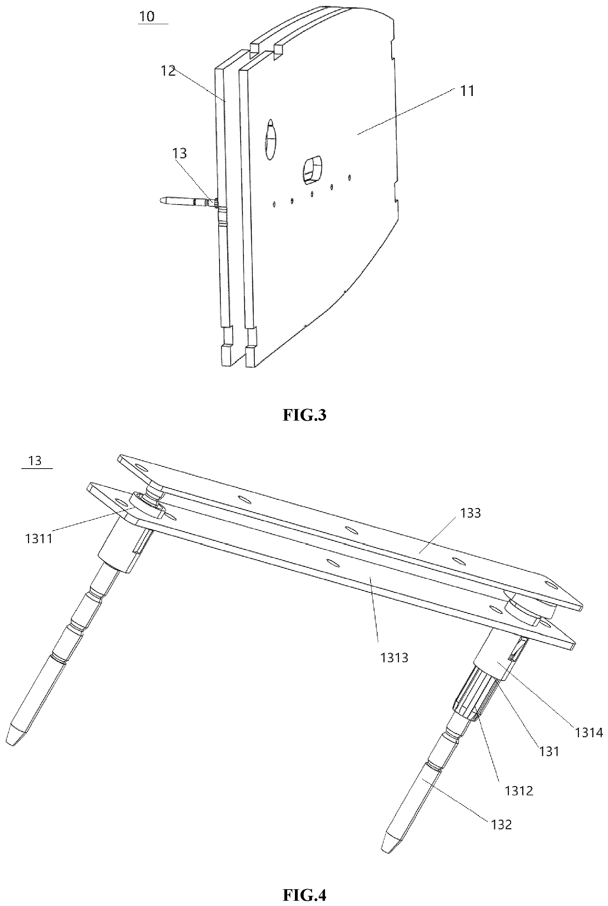

FIG. 3 is a third structural diagram of a foldable armrest according to the present disclosure (folded state).
FIG. 4 is a structural diagram of a width adjusting mechanism being at a first gear according to the present disclosure.

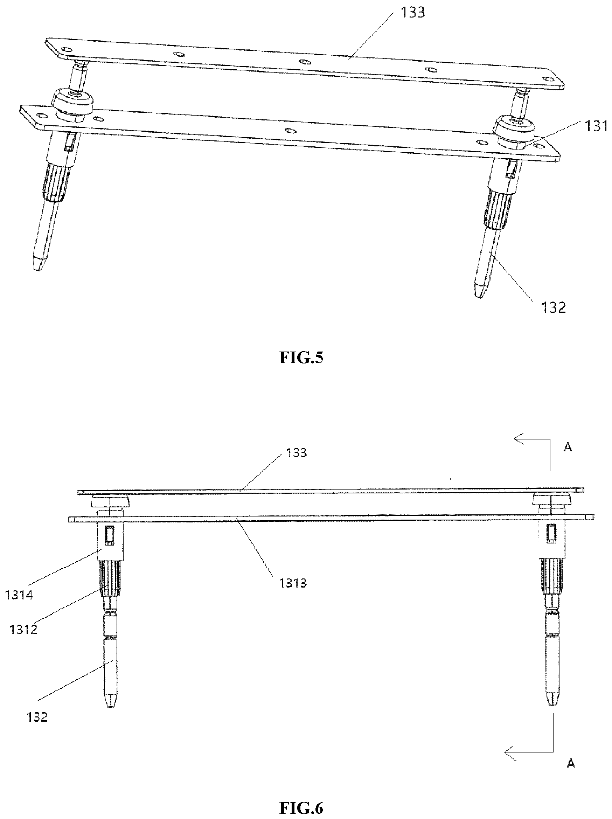

FIG. 5 is a structural diagram of a width adjusting mechanism being at a second gear according to the present disclosure.
FIG. 6 is a front view of a width adjusting mechanism being at a first gear according to the present disclosure.

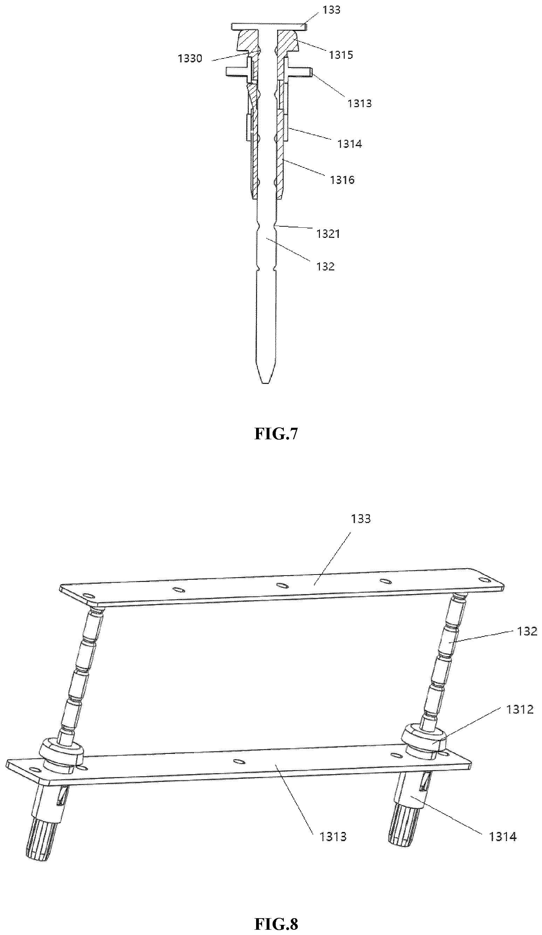

FIG. 7 is a section view of A-A of FIG. 6.
FIG. 8 is a structural diagram of a width adjusting mechanism being at a sixth gear according to the present disclosure.

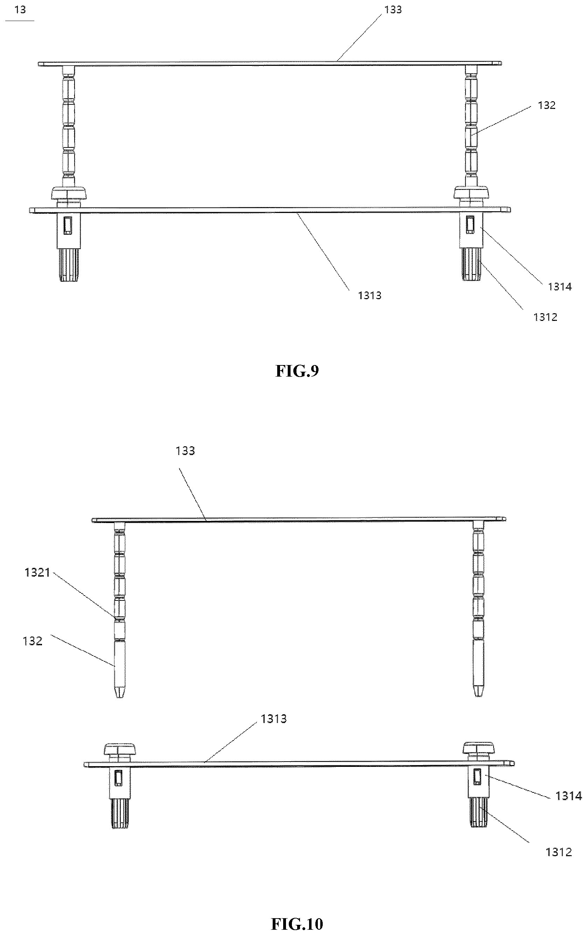

FIG. 9 is a front view of a width adjusting mechanism being at a sixth gear according to the present disclosure.
FIG. 10 is a breakdown structural diagram of a width adjusting mechanism according to the present disclosure.

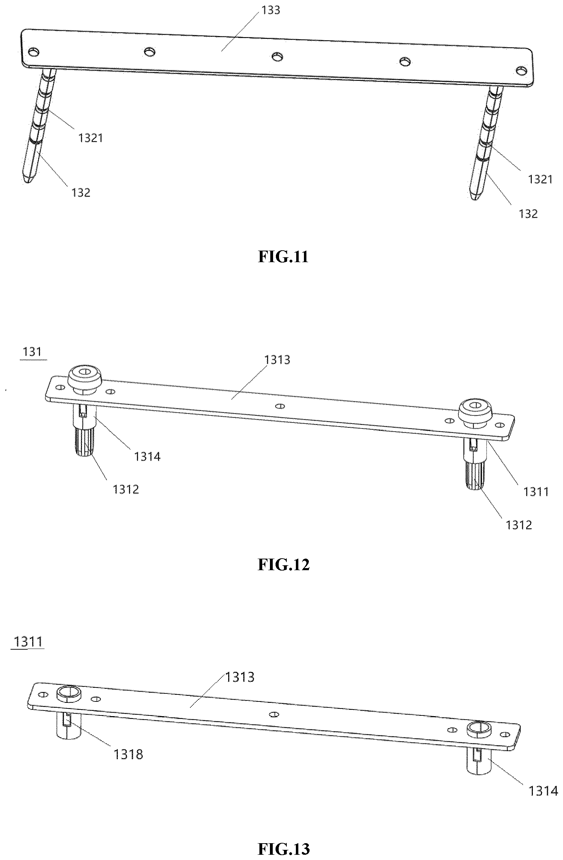

FIG. 11 is a connection relation diagram of adjusting rods and a connecting sheet according to the present disclosure.
FIG. 12 is a structural diagram of a locking kit according to the present disclosure.
FIG. 13 is a structural diagram of a connecting part according to the present disclosure.

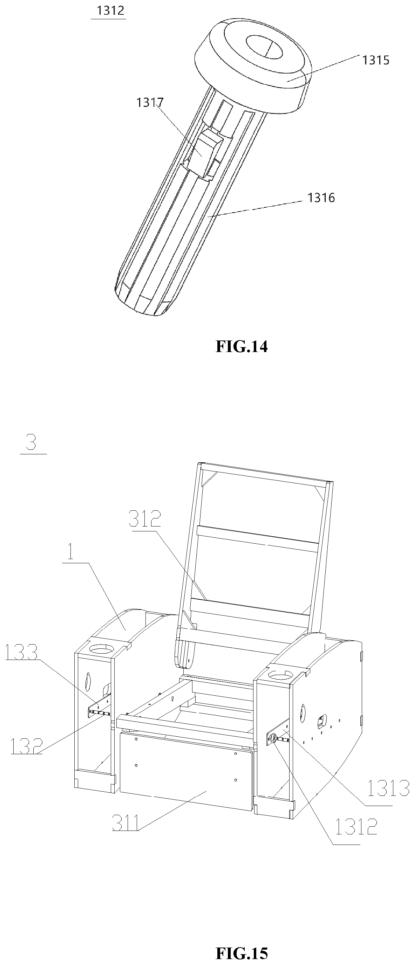

FIG. 14 is a structural diagram of a locking sleeve according to the present disclosure.
FIG. 15 is a structural diagram of a sofa according to the present disclosure (unfolded state).

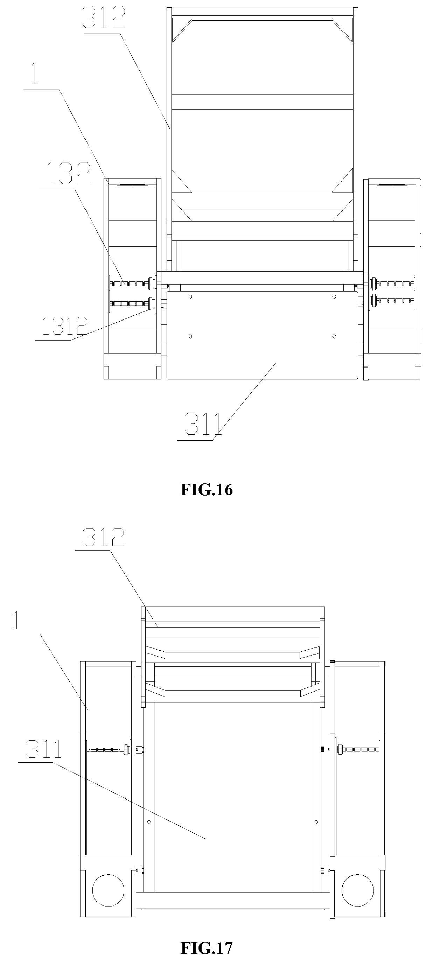

FIG. 16 is a front view of a sofa according to the present disclosure (unfolded state).
FIG. 17 is a top view of a sofa according to the present disclosure (unfolded state).

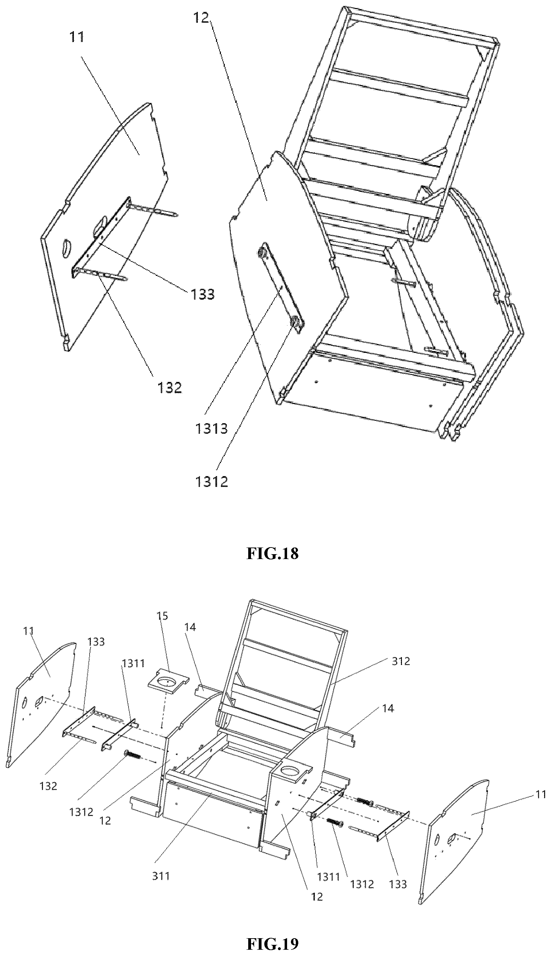

FIG. 18 is a partially exploded view of a sofa according to the present disclosure.
FIG. 19 is an exploded view of a sofa according to the present disclosure.

### DETAILED DESCRIPTION OF THE EMBODIMENTS

Embodiments of the present disclosure are described in details below, and examples of the embodiments are shown in drawings, wherein the same or similar reference numerals indicate the same or similar elements or elements with the same or similar functions all the time. The embodiments described with reference to the drawings below are exemplary, and are only used for explaining the present disclosure, rather than being understood as a limitation to the present disclosure.

In the description of the disclosure, it is to be understood that orientation or position relationships indicated by terms "upper", "lower", "left", "right", "inner", "outer", "axial", "circumferential", and the like indicates orientation or position relationships shown in the drawings, and are adopted not to indicate or imply that indicated devices or components must be in specific orientations or structured and operated in specific orientations but only to conveniently and simply describe the disclosure and thus should not be understood as a limitation to the disclosure. Thus, the features limited with "first" and "second" may definitely or implicitly include one or more of the features. In the description of the present disclosure, unless otherwise stated, "a plurality of' means two or more.

Unless otherwise clearly specified and limited, in the description according to the present disclosure, terms "installed", "coupled", and "connected" should be broadly understood. For example, the terms may refer to fixed connection, detachable connection or integrated connection; the terms may refer to mechanical connection or electric connection; and the terms may refer to direct connection, indirect connection through an intermediate medium, or communication between interiors of two elements. For those ordinarily skilled in the art, the specific meaning of the above terms in the present disclosure may be understood according to specific circumstances.

In the description of the specification, the description of reference terms "one embodiment", "some embodiments", "a schematic embodiment", "examples", "specific examples", or "some examples", etc. means that the specific features, structures, materials or characteristics described in conjunction with the embodiments or examples are included in at least one embodiment or example of the present disclosure. In the specification, the schematic description of the above terms does not necessarily refer to the same embodiment or example. The described specific features, structures, materials or characteristics may be combined properly in any one or more embodiments or examples. In the above implementation, electric connection means that the conduction of a circuit structure, and a specific manner for achieving electric connection may be conventional electric connection manners such as welding and overlap joint.

The technical solution of the present disclosure will be further described with reference to specific embodiments, however, the scope of protection of the disclosure is not limited thereto.

As shown in the figures, the present disclosure provides a foldable armrest 1, including an armrest body 10. The armrest body 10 includes an outer side plate 11 and an inner side plate 12 which are capable of drawing close to each other in a width direction of the armrest body. A width adjusting mechanism 13 is connected between the outer side plate 11 and the inner side plate 12; the width adjusting mechanism 13 includes locking kits 131 and adjusting rods 132. The locking kits 131 are connected with the inner side plate 12, the adjusting rods 132 are connected with the outer side plate 11, and the locking kits 131 and the adjusting rods 132 are interlocked in the width direction of the armrest body. When the outer side plate 11 and the inner side plate 12 move away from each other in the width direction of the armrest body, the width adjusting mechanism 13 extends in the width direction of the armrest body, and when the outer side plate 11 and the inner side plate 12 move closer to each other in the width direction of the armrest body, the width adjusting mechanism 13 retracts in the width direction of the armrest body.

In some embodiments of the present disclosure, each of the locking kits 131 includes a connecting part 1311 and a locking sleeve 1312, the connecting part 1311 is connected to one side of the inner side plate facing the outer side plate, and the locking sleeve 1312 detachably penetrates into the connecting part 1311.

In some embodiments of the present disclosure, the connecting parts 1311 include a connecting plate 1313, the connecting plate 1313 is installed on one side of the inner side plate facing the outer side plate through screws. Two insertion holes allowing the locking sleeves to be inserted therein are formed in the connecting plate, two ends of each insertion hole extend in a direction perpendicular to the connecting plate to form two sections of cylindrical walls 1314 enclosed outside the locking sleeve, and the cylindrical walls 1314 adjacent to one side of the inner side plate penetrate through the inner side plate.

In some embodiments of the present disclosure, each of the locking sleeves 1312 includes a head part 1315 and a rod part 1316 extending in an axial direction of the head part. A central through hole internally penetrates through the head part 1315 to the rod part 1316 in a central axis direction of the locking sleeve. The rod part 1316 is detachably inserted into the cylindrical walls of the connecting plate 1313 and mated with the cylindrical walls in a clamped manner.

In some embodiments of the present disclosure, elastic clamps 1317 capable of being sprung or pressed down are arranged on the rod parts 1316, recesses 1318 mated with the clamps 1317 are formed in the cylindrical walls 1314 inserted into the inner side plate. When the rod parts 1316 are inserted into the cylindrical walls, the elastic clamps are clamped into the recesses of the cylindrical walls.

In some embodiments of the present disclosure, each adjusting rod 132 corresponds to one insertion hole, the adjusting rod 132 is connected to one side of the outer side plate 11 facing the inner side plate through a connecting sheet 133. Each of the adjusting rods 132 is inserted into the central through holes in the width direction of the armrest body and mated with the corresponding locking sleeve in a clamped manner.

In some embodiments of the present disclosure, each of the adjusting rods 132 is provided with a plurality of annular clamping grooves 1321 in a length direction of the adjusting rod at intervals, clamping protrusions 1330 capable of being clamped into the annular recesses of the adjusting rods are arranged on inner walls of the head parts. When the adjusting rods 132 are inserted into the rod parts 1316, the clamping protrusions are alternatively clamped into the annular recesses 1321 of the adjusting rods 132.

Of course, structures of the locking sleeves 1312 are not only limited to structures shown in the drawings of the present invention, as long as clamped matching between the adjusting rods 132 and the locking sleeves 1312 is achieved.

In some embodiments of the present disclosure, six annular recesses 1321, namely a first gear to a sixth gear respectively, are formed in each adjusting rod 132. Wherein it is the first gear that has the minimum interval between the inner side plate and the outer side plate, and it is the sixth gear that has the maximum interval between the inner side plate and the outer side plate. A user may adjust the gear into a position according to actual requirements, a \width of each of the foldable armrests may be adjusted to 18 cm to the maximum degree and 7 cm to the minimum degree. The adjustment range is wide, and the foldable armrest is suitable for different scenes. The whole foldable armrest is convenient to adjust and easy to operate.

In some embodiments of the present disclosure, a plurality of supporting plates 14 are detachably connected between the outer side plate 11 and the inner side plate 12. The supporting plates 14 may be connected with the outer side plate 11 and the inner side plate 12 in a mortise and tenon joint manner without being fixed by gun nails or screws, such that the supporting plates 14 are convenient to detach and install. It is ensured that a wooden support is well supported, and meanwhile, a cloth cover is tightened, such that an appearance is kept flat. The supporting plates 14 may be configured into different sizes, so as to conveniently adapt to selection of different widths.

Alternately, the supporting plates 14 may be replaced with telescopic structures. Self-locking devices are arranged on the telescopic structures, which may not only adjust the width of the armrest body together with the width adjusting mechanism without being detached, but also may be rigidly supported between the inner side plate and the outer side plate to tighten the armrest cover, so as to keep the appearance flat.

In some embodiments of the present disclosure, storage plates 15 are detachably installed on tops of the outer side plate 11 and the inner side plate 12, and storage holes 151 are formed in middles of the storage plates 15. The storage plates 15 may be connected with the outer side plate 11 and the inner side plate 12 in a mortise and tenon joint manner, and the storage plates 15 are in a horizontal state.

In some embodiments of the present disclosure, the armrest body 10 is detachably sleeved with the armrest cover 2.

In some embodiments of the present disclosure, a handbag is arranged on a top of the armrest cover 2. When the armrest cover 2 sleeves outside the armrest body, the handbag is located on a top of the foldable armrest. The handbag may be detachably connected with the armrest cover, and for example, may be connected with the armrest cover 2 through structures such as a Velco and a zipper.

In some embodiments of the present disclosure, storage bags mated with storage holes 151 are arranged on the armrest covers 2. When the armrest covers 2 sleeve outside the armrest body, the storage bags are put into the storage holes to form storage space for storing articles.

In some embodiments of the present disclosure, the armrest cover 2 may be of a fully-detachable or the semi-detachable structure, and the supporting plates 14 are convenient to detach and install since the armrest cover 2 is of the detachable structure. The detached armrest cover may be washed and subjected to vacuum compression packaging, which is conducive to transportation.

A sofa of the present disclosure is detached in the following three manners according to installation requirements and container loading requirements:
1) Fully detaching of the armrest cover, wherein a bottom of the armrest cover is bound and closed through the Velco. The armrest cover is detachably separated from the armrest body, the supporting plates are convenient to detach and install, and the detached armrest cover may be washed and subjected to vacuum compression packaging.
2) Fully detaching of the armrest cloth cover and detaching of the outer side plate, wherein the armrest cloth cover is bound and closed through the Velco. The armrest cover is detachably separated from the armrest body, the supporting plates are convenient to detach and install, and the detached armrest cloth covers may be washed and subjected to vacuum compression packaging. The widths of the armrests may be minimized by detaching the outer side plate, such that the container loading capacity can be maximized.
3) Semi-detaching of the armrest cloth cover and detaching of the handbag, wherein the armrest cloth cover is closed through the zipper, and the supporting plates are convenient to install. The handbag is connected with the armrest cloth cover through the zipper, so as to be conveniently detached and subjected to vacuum compression packaging.

In some embodiments of the present disclosure, a plurality of grooves extending in a central axis direction of each rod part are formed on an outer wall of the rod part 1316.

The sofa is taken as an example for illustration in the present disclosure. A sofa 3, includes at least one foldable armrest 1. A sofa 3, includes a main frame. The main frame includes a base 311, two foldable armrests 1 arranged on two sides of the base, and a backrest 312 arranged on a rear side of the base. The foldable armrests 1 are oppositely arranged, and inner side plates 12 of the foldable armrests 1 are connected with the base 311.

The sofa 3 of the present disclosure further includes a seat cover and a backrest cushion which sleeve the sofa, and the seat cover and the backrest cushion are both closed through Velcos based on a gun-nail-free process, and may be detached, so as to be conveniently subjected to vacuum compression packaging.

Of course, the foldable armrests of the present disclosure may further be applied to a single chair in addition to being applied to the sofa.

The armrest body of the present disclosure has a plurality of adjustable gears, each annular recess corresponds to one gear, and the gear is defined according to an interval between the inner side plate and the outer side plate. It is the first gear when the interval between the inner side plate and the outer side plate is the minimum, and it is the sixth gear when the interval between the inner side plate and the outer side plate is the maximum. During transportation, the first gear may be selected, the supporting plates are detached after fully detaching or semi-detaching the armrest cover, and a width of the sofa or single chair is adjusted to the minimum, so as to increase the container loading capacity. When a user needs to adjust the width of the armrest body according to his/her own requirements, he/she pulls the outer side plate outwards in the width direction of the armrest body, the outer side plate drives the adjusting rods to move synchronously till the clamping protrusions of the locking sleeves are clamped into the annular recesses at a corresponding gear, as a result, the armrest is fixed in the width direction by the locking sleeves and the adjusting rods, and therefore the width of the sofa or single chair is adjusted.

The connecting parts and the adjusting rods of the present disclosure are connected through the connecting plate and the connecting sheet respectively, distance matching is precise, and either smooth inserting or pulling-out by pressing latches may be achieved, thereby achieving convenient installation and detachment.

The plurality of supporting plates are detachably connected between the outer side plate and the inner side plate, and the supporting plates may be connected with the outer side plate and the inner side plate in a mortise and tenon joint manner without fixation by gun nails or screws, thereby achieving convenient installation and detachment. It is ensured that the outer side plate and the inner side plate are well supported, and meanwhile the armrest covers are tightened, such that the appearance is kept flat.

The widths of the foldable armrests may be adjusted by the sofa of the present disclosure according to requirements, six adjustable gears are set, and the widths of the foldable armrests may be adjusted to 18 cm to the maximum degree and 7 cm to the minimum degree. During transportation, the first gear may be selected or the outer side plate is detached directly, and therefore space is greatly compressed. During use, each of the foldable armrests is adjusted between the first gear and the sixth gear, transportation space and costs may be saved, and the container loading capacity may be increased. The width may further be adjusted according to actual requirements of the users, such that the requirements of different users may be met. The whole structure is convenient to adjust and attractive in appearance.

Although the embodiments of the present disclosure have been shown and described, those ordinarily skilled in the art may understand that they may make various changes, modifications, substitutions or variants on these embodiments without departing from the principle and purpose of the present disclosure, and the scope of the present disclosure is limited by claims and their equivalents.

## Claims

1. A Foldable armrest, comprising an armrest body (10), **characterized in that** the armrest body (10) comprises an outer side plate (11) and an inner side plate (12) that are capable of being folded in a width direction of the armrest body (10); a width adjusting mechanism (13) is connected between the outer side plate (11) and the inner side plate (12); the width adjusting mechanism (13) comprises locking kits (131) and at least one adjusting rod (132); the locking kits (131) are connected with the inner side plate (12), the at least one adjusting rod (132) are connected with the outer side plate (11), and the locking kits (131) and the adjusting rods (132) are interlocked in the width direction of the armrest body (10); when the outer side plate (11) and the inner side plate (12) move away from each other in the width direction of the armrest body (10), the width adjusting mechanism (13) extends in the width direction of the armrest body (10), and when the outer side plate (11) and the inner side plate (12) move closer to each other in the width direction of the armrest body (10), the width adjusting mechanism (13) retracts in the width direction of the armrest body (10).

2. The foldable armrests according to claim 1, **characterized in that** each of the locking kits (131) comprises a connecting part (1311) and a locking sleeve (1312), the connecting part (1311) is connected to one side of the inner side plate (12) facing the outer side plate (11), and the locking sleeve (1312) detachably penetrates into the connecting part (1311).

3. The foldable armrests according to claim 2, **characterized in that** the connecting part (1311) comprises a connecting plate (1313), the connecting plate (1313) is installed on one side of the inner side plate (12) facing the outer side plate (11), at least one insertion hole allowing the locking sleeve (1312) to be inserted therein is formed in the connecting plate (1313), two ends of each of the insertion holes extend in a direction perpendicular to the connecting plate (1313) to form two sections of cylindrical walls (1314) enclosed outside the locking sleeve (1312), and the cylindrical walls (1314) penetrate through the inner side plate (12).

4. The foldable armrests according to claim 3, **characterized in that** the locking sleeve (1312) comprises a head part (1315) and a rod part (1316) extending in an axial direction of the head part (1315), and a central through hole internally penetrates through the head part (1315) to the rod part (1316) in a central axis direction of the locking sleeve (1312); and the rod part (1316) is detachably inserted into the cylindrical walls (1314) of the connecting plate (1313) and mated with the cylindrical walls (1314) in a clamped manner.

5. The foldable armrests according to claim 4, **characterized in that** an elastic clamp (1317) capable of being sprung or pressed down is arranged on the rod part (1316), an recess (1318) mated with the elastic clamps is formed in the cylindrical walls (1314), and when the rod part (1316) is inserted into the cylindrical walls (1314), the elastic clamp (1317) is clamped into the recess (1318) of the cylindrical walls (1314).

6. The foldable armrests according to claim 5, **characterized in that** each of the adjusting rods (132) corresponds to one insertion hole, each adjusting rod (132) is connected to one side of the outer side plate (11) facing the inner side plate (12) through a connecting sheet (133), and each adjusting rod (132) is inserted into the central through hole in the width direction of the armrest body (10) and mated with the locking sleeve (1312) in a clamped manner.

7. The foldable armrests according to claim 6, **characterized in that** each adjusting rod (132) is provided with a plurality of annular recesses (1321) in a length direction of the adjusting rod (132) at intervals, and clamping protrusions (1330) capable of being clamped into the plurality of annular recesses (1321) of the adjusting rod (132) are arranged on inner walls of the head part (1315).

8. The foldable armrests according to claim 1, **characterized in that** a plurality of supporting plates (14) are detachably connected between the outer side plate (11) and the inner side plate (12).

9. A sofa, **characterized by** comprising at least one foldable armrest (1) according to any one of claims 1 to 8.

10. A single chair, **characterized by** comprising at least one foldable armrest (1) according to any one of claims 1 to 8.
